# EUROPÄISCHE PATENTSCHRIFT

(11) **EP 2 824 153 B1**
(45) Veröffentlichungstag und Bekanntmachung des Hinweises auf die Patenterteilung: **26.10.2016**
(21) Anmeldenummer: 13175546.4
(22) Anmeldetag: 08.07.2013
(51) Int. Cl.: C09J 7/04, B60R 16/02

(54) **Kabelwickelband**
Cable wrapping tape
Bande d'enroulement de câble

(43) Veröffentlichungstag der Anmeldung: 14.01.2015
(73) Patentinhaber: Coroplast Fritz Müller GmbH & Co. KG, 42279 Wuppertal (DE)
(72) Erfinder: Lodde, Christoph, 59439 Holzwickede (DE); Wittig, Gülay, 44799 Bochum (DE)
(74) Vertreter: Patent- und Rechtsanwälte Dr. Solf & Zapf

(56) Entgegenhaltungen:
- EP-A1- 1 074 595
- EP-A1- 2 298 845
- EP-A1- 2 322 385
- EP-A1- 2 520 629

## Beschreibung

Die vorliegende Erfindung betrifft ein Kabelwickelband, umfassend einen bandförmigen Träger aus textilem Gewebe mit Kettfäden und Schussfäden aus PET-Kunststoffmaterial, wobei die Kett- und Schussfäden aus Filamentgarnen gebildet sind, und wobei die Fadenstärke der Schussfäden größer ist als die Fadenstärke der Kettfäden sowie eine auf dem Träger aufgebrachte Klebstoffschicht.

Aus der EP 107 45 95 ist ein handeinreißbares Klebeband bekannt, das einen Gewebeaufbau des Trägers aus dünnen Kettfäden und dicken Schussfäden besitzt, wobei die Summe der Kettfäden eine Stärke von maximal 2.500 dtex pro cm aufweist sowie die Tatsache, dass die Kettfäden durch die Beschichtung mit einem Klebstoff in ihrer Position fixiert werden. Die Fadenstärke der Kettfäden soll von 40 bis 60 dtex betragen, und die Fadenstärke der Schussfäden soll von 150 bis 250 dtex gewählt sein.

Aus der EP 199 03 93 A1 ist ein Klebeband mit einem bandförmigen Träger aus Kett- und Schussfäden bekannt, bei dem die Fadenstärke der Kettfäden 50 dtex und mehr beträgt.

Auf Grund der gewählten Fadenstärken dieser bekannten Klebebänder ergibt sich eine relative Steifigkeit, so dass das Umwickeln der Kabel, insbesondere bei engen Biegungen, Schwierigkeiten bereitet. Darüber hinaus besitzen diese bekannten Klebebänder ebenfalls bedingt durch die Auswahl der Fadenstärken eine relativ große Banddicke, wodurch sich einerseits hohe Materialkosten ergeben und andererseits zusätzliches Gewicht bei den fertiggestellten und umwickelten Kabelsätzen.

Der vorliegenden Erfindung liegt die Aufgabe zu Grunde, die vorstehenden Nachteile zu vermeiden und ein Klebeband der eingangs beschriebenen Art derart zu verbessern, dass es einerseits schmiegsam und flexibel ist und andererseits auf Grund einer geringeren Banddicke verringerte Herstellkosten aufweist und zudem sowohl manuell und maschinell verarbeitbar ist.

Erfindungsgemäß wird dies ausgehend von dem eingangs beschriebenen Kabelwickelband dadurch erreicht, dass die Kettfäden eine Fadenstärke größer/gleich 20 dtex und kleiner/gleich 40 dtex besitzen.

Hierbei ist es von Vorteil, wenn die Anzahl der Kettfäden pro cm größer/gleich 20 Stück pro cm und kleiner/gleich 35 Stück pro cm beträgt, wobei insbesondere die Filamentanzahl der Filamente pro Kettfaden 24 Stück betragen kann. Auf Grund der Materialauswahl ergibt sich eine sehr gute Temperaturstabilität von 125 ° C bis 150 ° C, und das erfindungsgemäße Klebeband ist sowohl manuell als auch maschinell verarbeitbar, da die Abrollkräfte gering sind und auch die Reißdehnung des erfindungsgemäßen Klebebandes sowie die Reißfestigkeit sowohl eine manuelle als auch eine maschinelle Verarbeitung ermöglichen. Zudem erfüllt das erfindungsgemäße Klebeband auch die Anforderungen gemäß LV 312 an die Quereinreißbarkeit.

Weitere vorteilhafte Ausführungen der Erfindung sind in den Unteransprüchen enthalten und an Hand des in den beiliegenden Zeichnungen dargestellten Ausführungsbeispiels wird die Erfindung näher erläutert. Es zeigen:
- Fig. 1: eine Aufsicht auf ein erfindungsgemäßes Klebeband und
- Fig. 2: einen Schnitt entlang der Schnittlinie II-II in Fig. 1.

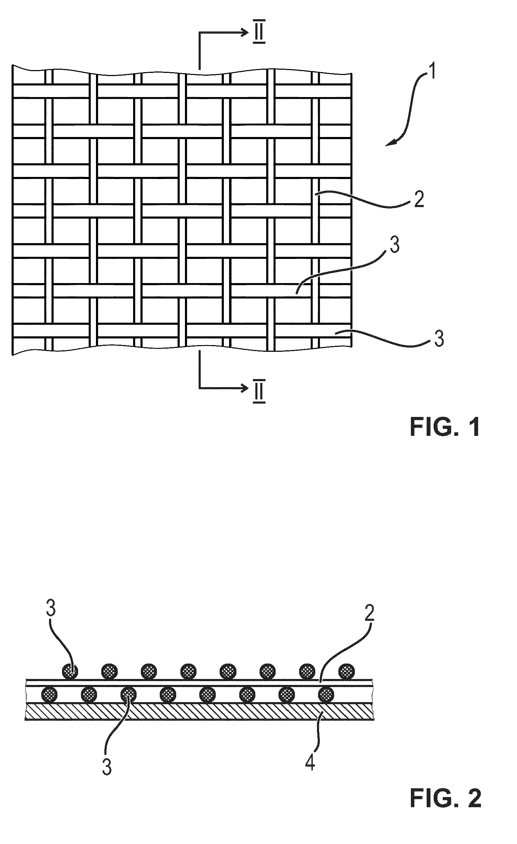

Wie sich aus Fig. 1 ergibt, weist ein erfindungsgemäßes Kabelwickelband einen bandförmigen Träger 1 aus textilem Gewebe auf, der aus Kettfäden 2 und Schussfäden 3 gebildet ist. Das Material der Kettfäden 2 und Schussfäden 3 ist ein PET-Kunststoffmaterial, wobei insbesondere Polyester Verwendung findet. Die Kett- und Schussfäden 2, 3 sind aus Filamentgarnen gebildet. Filamentgarne bestehen theoretisch aus unendlich langen Fasern, den sogenannten Filamenten. Filamentgarne sind in der Regel nicht verdreht, d. h. die Filamente laufen im Wesentlichen parallel zueinander, da sie auch ohne eine Verdrehung zusammenhalten. Man unterscheidet Monofilamente, wobei nur eine einzige Faser, d. h. Filament das Garn bildet oder Multifilamente, die aus mehr als zwei Einzelfasern bestehen. Filamentgarne gibt es im Markt als folgende Qualitäten:

### 1. POY - Garn

Das sind sogenannte Pre-Oriented Garne, diese sind vororientierte Filamentgarne, hergestellt aus einem thermoplastischen Kunststoff wie Polyester oder Polyamid, das mit hoher Geschwindigkeit gesponnen und teilverstreckt wurde.

### 2. FDY - Garn (Fully Drawn Yarn)

Hierbei handelt es sich um ein glattes, thermoplastisches Filamentgarn, das nach dem Ausspinnen und Anblasen im Kühlschacht zwischen zwei Galetten (FDY) voll verstreckt und aufgewickelt wird.

### 3. DTY - Garn (DTY, Draw Textured Yarns)

Hierbei handelt es sich um strecktexturierte Garne, die meistens über eine Falschdrall-Friktionstexturierung mit integrierter Verstreckung hergestellt werden.

Auf dem Träger 1 ist einseitig, im dargestellten Beispiel an seiner Unterseite, eine Klebstoffschicht 4 aufgebracht, die vorzugsweise aus einem Acrylatkleber oder einem Synthesekautschuk hergestellt ist. Erfindungswesentlich ist, dass die Fadenstärke der Kettfäden 2 größer/gleich 20 dtex und kleiner/gleich 40 dtex ist, wobei die Fadenstärke der Schussfäden 3 größer ist als die Fadenstärke der Kettfäden 2. Die Anzahl der Kettfäden 2 pro cm ist größer/gleich 20 Stück pro cm und kleiner/gleich 30 Stück pro cm. Vorteilhafterweise ist die Filamentenanzahl, d. h. die Anzahl der Fasern pro Kettfaden 2 24 bis 96 Filamente, vorzugsweise 34 bis 36 Filamente. Ebenso ist es auch denkbar, dass die Anzahl der Kettfäden 2 und Schussfäden 3 eine Filamentanzahl von 36, 48 und 96 Filamenten haben. Weiterhin ist es erfindungswesentlich, dass die Anzahl der Schussfäden 3 größer/gleich 28 pro cm und kleiner/gleich 40 pro cm beträgt. Die Fadenstärke der Schussfäden 3 beträgt 155 dtex bis 200 dtex, vorzugsweise 167 dtex. Vorteilhafterweise weist das erfindungsgemäße Trägergewebe Schussfäden 3 auf, die pro Schussfaden 3 24 bis 96 Filamente, vorzugsweise 36 Filamente (Fasern) aufweisen. Das Flächengewicht des Trägers 1 beträgt größer/gleich 40 g/qm und kleiner/gleich 100 g/qm beträgt, insbesondere kann das Flächengewicht des Trägers 1 größer/gleich 80 g/qm und kleiner/gleich 100 g/qm sein. Die Kettfäden 2 und/oder die Schussfäden 3 sind intermingelt und/oder texturiert. Weiterhin kann es erfindungsgemäß vorgesehen sein, dass die Kettfäden 2 und/oder die Schussfäden 3 spinndüsengefärbt sind. Dabei wird unter Spinndüsenfärbung verstanden, dass die Einfärbung der Fäden während des Extrusionsprozesses der die Fäden bildenden Filamente erfolgt. In der folgenden Tabelle 1 sind vorteilhafte Ausführungsformen eines erfindungsgemäßen Klebebandes aufgeführt.

**Tabelle 1:**

| Trägermaterial ohne Beschichtung | | | | |
|---|---|---|---|---|
| | Einheit | Konstruktion 1 | Konstruktion 2 | Konstruktion 3 |
| Trägermaterial ohne Beschichtung | --- | Polyester | Polyester | Polyester |
| Flächengewicht | g/qm | 40-70 | 70-100 | 70-100 |
| Faserart | --- | 100 % Polyester | 100 % Polyester | 100 % Polyester |
| Garnart Kettfaden/Schussfaden | --- | Filament, intermingelt / texturiert und spinndüsengefärbt | Filament, intermingelt / texturiert und spinndüsengefärbt | Filament, intermingelt / texturiert und spinndüsengefärbt |
| Anzahl der Kettfäden | 1/cm | 20 | 30 | 30 |
| Filamentanzahl Kettfäden | Stück | 24 | 24 | 24 |
| Faserstärke der Kettfaden | dtex | 40 | 33 | 20 |
| Anzahl der Schussfäden | 1/cm | 30 | 35 | 35 |
| Faserstärke der Schussfäden | dtex | 167 | 167 | 167 |
| Filamentanzahl Kettfäden | Stück | 36 | 36 | 36 |

In Tabelle 2 ist eine Übersicht über die mechanischen Eigenschaften der einzelnen Ausführungsformen gemäß Tabelle 1 wiedergegeben. Tabelle 3 enthält technische Daten des erfindungsgemäßen Klebebandes gemäß Tabelle 1 im Vergleich zu Klebebändern des Standes der Technik.

**Tabelle 2:**

| Trägermaterial Konstruktionen 1 bis 3 ohne Beschichtung | | | | | | |
|---|---|---|---|---|---|---|
| Prüfung | Einheit | Konstruktion 1 | Konstruktion 2 | Konstruktion 3 | Patent EP 1074595 | Patent EP 1990393 A1 |
| Trägermaterial ohne Beschichtung | --- | Polyester | Polyester | Polyester | Polyester | Polyester |
| Flächengewicht | g/qm | 40-70 | 70-100 | 70-100 | 65-70 | 70-75 |
| Dicke | mm | 0,10 | 0,10 | 0,08 | 0,10 | 0,12 |
| Reißdehnung | % | 8-10 | 8-20 | 8-20 | 23-30 | 25-28 |
| Bruchkraft | N/cm | 60-70 | 50-60 | 40-55 | 60-70 | 65-85 |
| Luftdurchlässigkeit | I/m²s | 60-100 | 80-200 | 100-300 | 60-200 | 60-200 |
| Weiterreißfestigkeit | mN | 5.000-8.000 | 4.000- 7.000 | 2.500-6.000 | 6.000-9.000 | 9.000-13.000 |

**Tabelle 3:**

| Diese Tabelle bezieht sich auf das beschichtete Klebeband. | | | | |
|---|---|---|---|---|
| Prüfung | Einheit | Konstruktionen 1-3 | Patent EP 1074595 | Patent EP 1990393 |
| Dicke | mm | 0,08-0,12 | 0,15 | 0,15 |
| Reißdehnung | % | 10-20 | 28-35 | 20-30 |
| Reißfestigkeit | N/cm | 40-80 | 60-70 | 65-85 |
| Klebkraft Stahl | N/cm | 2,0-5,5 | 4,0-5,0 | 4,0-8,0 |
| Klebkraft Bandrücken | N/cm | 2,0-6,0 | 2,0-3,0 | 2,0-6,0 |
| Abrollkraft | N | 2-9 | 2-9 | 2-9 |
| Flagging (30 min.) | mm | 0-1 | 0-1 | 0-1 |
| Flagging (24 Std.) | mm | 0-1 | 0-1 | 0-1 |
| Abrieb 5 mm Dorn | Hübe | 20-75 (Klasse A) | 35-70 (Klasse A) | 130-150 (Klasse B) |
| Geräuschdämpfung | dB (A) | 1-1,5 (Klasse A) | 1-1,6 (Klasse A) | 1-1,6 (Klasse A) |
| Quereinreißbarkeit von Hand gem. LV 312 | ./. | quereinreißbar | quereinreißbar | quereinreißbar |

Ein erfindungsgemäßes Klebeband zeichnet sich durch sehr gute Temperaturstabilität gemäß LV 312 im Bereich von 105 ° C bis 150 ° C aus, ist manuell und maschinell verarbeitbar, besitzt eine geringe Banddicke, ist schmiegsam und flexibel und besteht aus einem verrottungsfesten Träger. Durch die erfindungsgemäße Ausbildung kann auf Einsatz von Ausrüstungsschritten wie z. B. Appretur oder Nachwaschen verzichtet werden, was bei den Klebebändern des Standes der Technik erforderlich ist. Die in den vorstehenden Tabellen enthaltenen Basisdaten des Trägers 1 und des erfindungsgemäßen Klebebandes und die wiedergegebenen Parameter werden nach nachfolgenden Normen bestimmt:

**Tabelle 4:**

| DIN Normen | Neue Bezeichnung | Datum der aktuell gültigen Version | |
|---|---|---|---|
| EN ISO 2286-2 | | 1998-07 | Flächengewicht |
| DIN 53830-3 | | 1981-05 | Bestimmung der Feinheit von Garnen |
| DIN EN 1049-2 | | 1994-02 | Bestimmung der Anzahl der Fäden je Längeneinheit |
| DIN EN 1942 | | 2008-06 | Dicke |
| DIN EN 14410 | | 2003-06 | Bruchkraft / Dehnung |
| DIN EN 1939 | | 2003-12 | Klebkraft |
| DIN EN 1944 | | 1996-04 | Abrollkraft |
| DIN EN 21974 | DIN EN ISO 1974:2012-09 | 2012-09 | Weiterreißfestigkeit |
| DIN EN ISO 9237 | | 1995-12 | Luftdurchlässigkeit |
| DIN 53 362 | | 2003-10 | Biegesteifigkeit |
| flagging | | | gemäß LV 312 Stand 2009/10 |
| LV 312 | LV 312-1 | 2009-10 | Schutzsysteme für Leitungssätze in Kraftfahrzeugen Klebebänder; Prüfrichtlinie |

Die Quereinreißbarkeit von Hand wurde nach LV 312 bestimmt.

Der Abriebtest erfolgte mit einem Abriebtester nach der gemeinsamen Prüfrichtlinie der Firmen AUDI, BMW, DC und VW "Klebebänder für Kabelsätze in Kraftfahrzeugen", LV 312 an einem 5-mm-Dorn. Nach jeweils zehn Hüben erfolgte eine Kontrolle. Der Endwert war erreicht, sobald die Rückseitenbeschichtung (Klebeschicht 4) vom Träger 1 abgerieben wurde.

### Bezugszeichen

- 1: Träger
- 2: Kettfäden
- 3: Schussfäden
- 4: Klebebeschichtung

## Patentansprüche

1. Kabelwickelband, umfassend einen bandförmigen Träger (1) aus textilem Gewebe mit Kettfäden (2) und Schussfäden (3) aus PET-Kunststoffmaterial, wobei die Kett- und Schussfäden (2, 3) aus Filamentgarnen gebildet sind, wobei die Fadenstärke der Schussfäden (3) größer ist als die Fadenstärke der Kettfäden (2), und eine auf den Träger (1) aufgebrachte Klebebeschichtung (4), wobei die Fadenstärke der Kettfäden (2) größer/gleich 20 dtex und kleiner/gleich 40 dtex ist und die Fadenstärke der Schussfäden (3) 155 dtex bis 200 dtex beträgt, wobei die Anzahl der Kettfäden (2) pro cm größer/gleich 20 Stück pro cm und kleiner/gleich 30 Stück pro cm ist, und die Anzahl der Schussfäden (3) größer/gleich 28 pro cm und kleiner/gleich 40 pro cm beträgt, und wobei das Flächengewicht des Trägers (1) größer/gleich 40 g/qm und kleiner/gleich 100 g/qm beträgt, wobei die Kettfäden (2) und/oder die Schussfäden (3) intermingelt und/oder texturiert sind.

2. Kabelwickelband nach Anspruch 1,
**dadurch gekennzeichnet, dass** die Filamentzahl pro Kettfaden (2) 24 bis 96, vorzugsweise 24 bis 36 Filamente beträgt.

3. Kabelwickelband nach Anspruch 1 oder 2,
**dadurch gekennzeichnet, dass** die Schussfäden (3) pro Faden aus 24 bis 96, vorzugsweise 36 Filamenten bestehen.

4. Kabelwickelband nach einem der Ansprüche 1 bis 3,
**dadurch gekennzeichnet, dass** die Kett- und/oder Schussfäden (2, 3) spinndüsengefärbt sind.

5. Kabelwickelband nach einem der Ansprüche 1 bis 4,
**dadurch gekennzeichnet, dass** die Klebstoffschicht (4) aus einem Acrylatklebstoff oder einem Synthesekautschuk gebildet ist.

## Claims

1. Cable-wrapping tape comprising a tape-shaped carrier (1) comprising a woven textile fabric having warp threads (2) and weft threads (3) comprising a PET polymer material, wherein the warp and weft threads (2, 3) are formed of filament yarns, wherein the linear density of the weft threads (3) is greater than the linear density of the warp threads (2) and an adhesive coating (4) on the carrier (1), wherein the linear density of the warp threads (2) is not less than 20 dtex and not more than 40 dtex and the linear density of the weft threads (3) is in the range from 155 dtex to 200 dtex, wherein the number of warp threads (2) per cm is not less than 20 per cm and not more than 30 per cm, and the number of weft threads (3) is not less than 28 per cm and not more than 40 per cm, and wherein the basis weight of carrier (1) is not less than 40 g/sqm and not more than 100 g/sqm, wherein the warp threads (2) and/or the weft threads (3) are intermingled and/or textured.

2. Cable-wrapping tape according to Claim 1,
**characterized in that** the filament count per warp thread (2) is 24 to 96, preferably 24 to 36 filaments.

3. Cable-wrapping tape according to Claim 1 or 2,
**characterized in that** the weft threads (3) consist of 24 to 96, preferably 36 filaments per thread.

4. Cable-wrapping tape according to any of Claims 1 to 3,
**characterized in that** the warp and/or weft threads (2, 3) are spinneret dyed.

5. Cable-wrapping tape according to any of Claims 1 to 4,
**characterized in that** the adhesive layer (4) is formed of an acrylate adhesive or of a synthetic rubber.

## Revendications

1. Bande d'enrubannage de câble, comprenant un support (1) en forme de bande, constitué d'un tissu textile ayant des fils de chaîne (2) et des fils de trame (3) en un matériau plastique PET, les fils de chaîne et les fils de trame (2, 3) étant formés à partir de fils continus, le titre des fils de trame (3) étant supérieur au titre des fils de chaîne (2), et un revêtement adhésif (4) appliqué sur le support (1), le titre des fils de chaîne (2) étant supérieur ou égal à 20 dtex et inférieur ou égal à 40 dtex, et le titre des fils de trame (3) étant de 155 dtex à 200 dtex, le nombre des fils de chaîne (2) par cm étant supérieur ou égal à 20 fils par cm et inférieur ou égal à 30 fils par cm, et le nombre des fils de trame (3) étant supérieur ou égal à 28 par cm et inférieur ou égal à 40 par cm, et la masse surfacique du support (1) étant supérieure ou égale à 40 g/m² et inférieure ou égale à 100 g/m², les fils de chaîne (2) et/ou les fils de trame (3) étant entremêlés et/ou texturés.

2. Bande d'enrubannage de câble selon la revendication 1, **caractérisée en ce que** le nombre de filaments par fil de chaîne (2) est de 24 à 96, de préférence de 24 à 36 filaments.

3. Bande d'enrubannage de câble selon la revendication 1 ou 2, **caractérisée en ce que** les fils de trame (3) sont constitués de 24 à 96, de préférence de 36 filaments par fil.

4. Bande d'enrubannage de câble selon l'une des revendications 1 à 3, **caractérisée en ce que** les fils de chaîne et/ou les fils de trame (2, 3) sont teints dans la masse.

5. Bande d'enrubannage de câble selon l'une des revendications 1 à 4, **caractérisée en ce que** la couche adhésive (4) est formée d'un adhésif de type acrylate ou d'un caoutchouc synthétique.
